# FASCICULE DE BREVET EUROPEEN

(11) **EP 3 090 306 B1**
(45) Date de publication et mention de la délivrance du brevet: **13.10.2021**
(21) Numéro de dépôt: 14830996.6
(22) Date de dépôt: 22.12.2014
(51) Int. Cl.: G02C 13/00, G06T 7/62

(54) **APPAREIL, ACCESSOIRE ET PROCÉDÉ DE DÉTERMINATION DU DIAMÈTRE D'UN VERRE DESTINÉ A ÊTRE MONTÉ SUR UNE MONTURE DE LUNETTES OU DE CONTRÔLE DU MONTAGE D'UN VERRE DE LUNETTES SUR UNE MONTURE DE LUNETTES**
VORRICHTUNG, ZUBEHÖR UND VERFAHREN ZUR BESTIMMUNG DES DURCHMESSERS EINER LINSE ZUR MONTAGE AUF EINEM BRILLENGESTELL ODER ZUR STEUERUNG DER MONTAGE EINER GLASLINSE AUF EINEM BRILLENGESTELL
APPARATUS, ACCESSORY, AND METHOD FOR DETERMINING THE DIAMETER OF A LENS TO BE MOUNTED ONTO A GLASSES FRAME, OR FOR CONTROLLING THE MOUNTING OF A GLASSES LENS ONTO A GLASSES FRAME

(30) Priorité: 30.12.2013 FR 1363689
(43) Date de publication de la demande: 09.11.2016
(73) Titulaire: Essilor International, 94220 Charenton-le-Pont (FR)
(72) Inventeur: MARIE, Sarah, F-94220 Charenton Le Pont (FR); BONNIN, Thierry, F-94220 Charenton Le Pont (FR); HADDADI, Ahmed, F-94220 Charenton Le Pont (FR)
(74) Mandataire: Jacobacci Coralis Harle
(86) Numéro de dépôt international: PCT/FR2014/053501
(87) Numéro de publication internationale: WO 2015/101735

(56) Documents cités:
- WO-A1-2013/045789
- DE-A1-102011 052 165
- DE-U1-202012 000 167
- FR-A1- 2 362 418
- FR-A1- 2 578 660
- KR-B1- 101 300 671
- None

## Description

### DOMAINE TECHNIQUE AUQUEL SE RAPPORTE L'INVENTION

La présente invention concerne de manière générale le domaine des méthodes et appareils pour déterminer le diamètre d'un verre destiné à être monté sur une monture de lunettes ou pour contrôler le montage d'un verre de lunettes sur une monture de lunettes.

Elle concerne plus particulièrement un appareil comportant une partie matériel et une partie logiciel, l'appareil étant installé par exemple sur une tablette électronique à écran plat, ou une tablette tactile.

### ARRIERE-PLAN TECHNOLOGIQUE

La fabrication de lunettes de compensation ophtalmique repose sur des opérations de prise de mesures ophtalmiques, pour déterminer les valeurs de compensation sphérique et/ou cylindrique de chaque œil d'un utilisateur, ainsi que sur des mesures de paramètres physiologiques, tels que les demi-écarts pupillaires, nécessaires pour un positionnement correct en centrage et en orientation des verres par rapport à une monture de lunettes.

Dans le cas de la fabrication de verres progressifs, on détermine en outre pour chaque verre, une zone de vision de près et une zone de vision de loin.

En fonction de la monture de lunettes sélectionnée, l'opticien détermine le diamètre des lentilles adapté à la forme du contour des cercles de la monture.

La détermination du diamètre des lentilles pour une monture de lunettes peut présenter des difficultés du fait d'un angle de galbe de la monture de lunettes, c'est-à-dire d'une courbure générale de la monture dans le plan de Fraunhofer de l'utilisateur ou du fait d'un angle de dièdre de la monture, c'est-à-dire d'un angle entre les plans de maintien respectifs des lentilles droite et gauche dans la monture. La détermination du diamètre des lentilles pour une monture de lunettes peut encore être compliquée par la prise en compte du galbe des verres, c'est-à-dire de la courbure intérieure et/ou extérieure des verres de compensation ophtalmique.

Les verres de compensation ophtalmique sont généralement fournis avec des marquages effaçables correspondant au centre optique en vision de loin (en général une croix de montage), à une ligne de référence indiquant l'axe du cylindre (repérée par des traits), en cas de correction cylindrique, et, à une zone de vision de près, en cas de verre progressif (en général un petit cercle).

Après le montage des verres sur la monture, il est souhaitable de vérifier le bon positionnement des verres par rapport à la monture. Pour des lunettes progressives, il est de plus souhaitable de vérifier l'emplacement des zones de vision de près et de vision de loin, avec ou sans les marquages effaçables. Ce contrôle peut être effectué avec ou sans l'utilisateur, mais il est souhaitable de présenter à l'utilisateur le résultat de ce contrôle pour le sensibiliser à l'importance d'un montage adapté à sa morphologie et à sa vision.

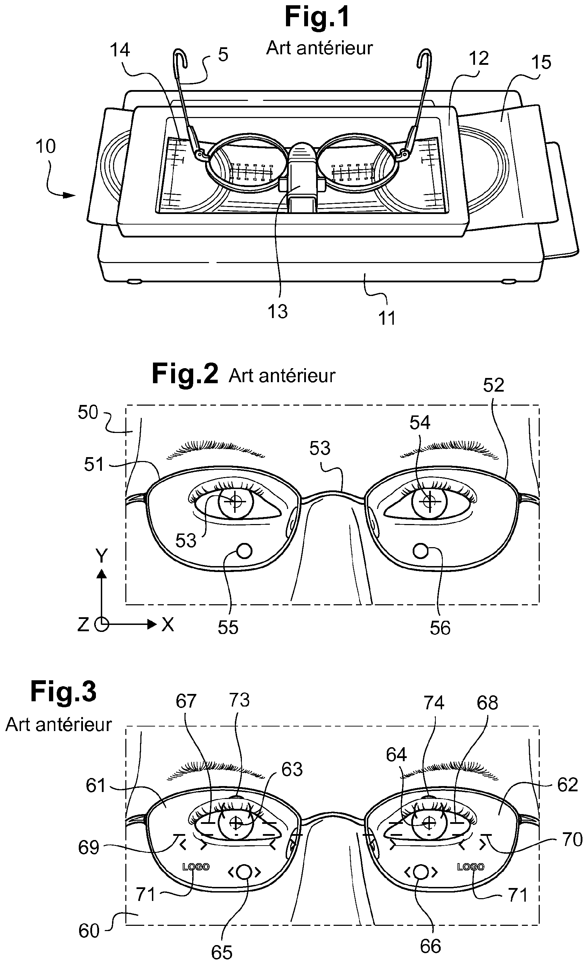

Le document de brevet FR 2578660 décrit un appareil pour déterminer le diamètre des lentilles ophtalmiques brutes à mettre en place sur une monture de lunettes déterminée. Un appareil de ce type est illustré sur la figure 1. Ce type d'appareil est basé sur l'utilisation de cartes imprimées. Chaque carte imprimée 15 comporte une pluralité de tracés correspondant à des lentilles ophtalmiques brutes de diamètres périphériques différents. L'appareil 10 comporte un socle 11, un guide de carte 14 cintré pour insérer une carte imprimée 15, un support 12 propre à la mise en place de la monture de lunettes 5 à équiper et un bras 13 mobile en translation pour maintenir la monture de lunettes dans le support 12. Cet appareil 10 permet la détermination du diamètre des lentilles ophtalmiques avant montage. Lorsque le cintrage du guide de carte 14 correspond au galbe de la monture de lunettes 5, cet appareil 10 permet de réduire la parallaxe entre la monture de lunettes 5 et la carte imprimée 1. Cependant, le galbe du guide de carte 14 ne correspond pas toujours au galbe de la monture de lunettes 5, d'où des erreurs de parallaxe. De plus, une carte pré-imprimée représente en général une pluralité de cercles concentriques, qui peuvent être difficiles à distinguer, ce qui est à l'origine d'erreurs de lecture du diamètre des cercles de la monture.

Le document de brevet US 2012/0073153 décrit un autre instrument de mesure du diamètre des verres pour une monture de lunettes, comprenant un porte-carte de forme concave, une glissière permettant d'insérer une carte imprimée flexible dans le porte-carte et un support de monture de lunettes. L'instrument est fourni avec un jeu de cartes pré-imprimées représentant la plupart des verres en fonction de leur diamètre, forme de contour... Pour mesurer le diamètre des verres, on place la face galbée de forme convexe d'une monture de lunette contre une carte imprimée insérée dans le porte-carte concave. De façon avantageuse, le porte-carte comprend plusieurs fentes, chaque fente permettant de recourber la carte imprimée suivant un rayon de courbure prédéterminé, pour adapter le galbe de la carte imprimée flexible au galbe de la monture. Cet instrument permet de déterminer le diamètre des verres destinés à être montés sur une monture de lunettes avant la fabrication des lunettes. Cet instrument permet aussi une vérification finale du montage des verres sur la monture.

Les documents WO 2013/045789 A1, KR 101 300 671 B1 et DE 20 2012 000167 U1 décrivent des méthodes de mesure de paramètres géométriques d'un individu portant des lunettes, basée sur l'utilisation d'une tablette électronique à écran plat couplée à un système d'acquisition d'image.

Cependant, les appareils de l'art antérieur requièrent un jeu complet de cartes pré-imprimées correspondant aux différents diamètres et formes de lentilles. Or, le nombre de montures et de formes de verres disponibles multiplie le nombre de cartes nécessaires. L'opticien ne dispose pas toujours des cartes pré-imprimées correspondant à tous les verres disponibles.

D'autre part, les appareils de l'art antérieur ne permettent pas de contrôler certains paramètres de montage, tels que la position de la zone de vision en fonction de l'écart-pupillaire du porteur de lunettes. Pour ce faire, on utilise en général des mesures complémentaires, par exemple via un autre instrument de mesure équipé d'une caméra. L'opticien effectue généralement une première acquisition d'image du porteur avec la monture de lunettes avant le montage des verres, puis une deuxième acquisition d'image du porteur avec la monture de lunettes après le montage des verres.

Ainsi, la figure 2 représente une première image 50 d'un utilisateur portant une monture de lunettes de présentation, munie de verres sans marquage et sans puissance optique, pour la mesure des paramètres physiologiques de l'utilisateur. Sur la figure 2, l'utilisateur regarde face à lui, en vision de loin. L'instrument de mesure permet, par des techniques connues par ailleurs, de déterminer sur la première image 50 : le centre de la pupille 53 de l'œil droit en vision de loin, repéré par une croix, et la zone de vision de près 55 de l'œil droit, repérée par un cercle par rapport à l'image du cercle droit 51 de la monture. De même, on détermine par rapport à l'image du cercle gauche 52 de la monture : le centre de la pupille 54 de l'œil gauche en vision de loin, repéré par une croix, et la zone de vision de près 56 de l'œil gauche, repérée par un cercle. Le plan XY de la figure 2 est repéré dans un repère orthonormé XYZ, l'axe X passant par les centres des pupilles 53, 54 des deux yeux. Par calibration, l'image 50 de la figure 2 permet de mesurer par exemple la distance inter-pupillaire ou la hauteur de montage d'un verre progressif par rapport au bord inférieur du cercle de la monture.

La figure 3 représente une deuxième image 60 d'un utilisateur portant la même monture de lunettes que sur la figure 2, après montage de verres progressifs 61, 62. Différents repères apparaissent sur les verres : des repères de centrage (croix de centrage 63, 64), les zones de vision de loin (cercles discontinus 73, 74), les zones de vision de près (cercles continus 65, 66), et des lignes horizontales 67, 68, 69, 70. L'image 60 de la figure 3 permet de contrôler le montage des verres sur la monture de lunettes portée par l'utilisateur. L'image 60 de la figure 3 permet de vérifier que le détourage, le centrage et le positionnement des verres sont corrects ou de détecter d'éventuelles erreurs de centrage et/ou de montage.

Dans le cas où le montage des verres est satisfaisant, l'image 60 permet à l'opticien de montrer à l'utilisateur que la sélection des verres et leur montage sont adaptés à la vision personnalisée de cet utilisateur. Les repères physiques, en général des marquages temporaires 63-71, sont ensuite effacés par l'opticien.

En cas de montage défectueux, l'opticien effectue la modification nécessaire, puis procède en général à une nouvelle étape de contrôle, par une nouvelle acquisition d'image du porteur avec la monture de lunettes après correction du montage des verres. Cependant, ces étapes de contrôles successifs sont chronophages pour le porteur et l'opticien.

Un des objectifs de l'invention est de proposer un appareil et un procédé de détermination du diamètre d'un verre de lunettes facilement configurable pour une monture de lunettes en fonction du diamètre et de la forme des verres disponibles.

Un autre objectif de l'invention est de proposer un appareil et un procédé de contrôle du montage d'un verre sur une monture, ne nécessitant pas la présence du porteur de lunettes.

### OBJET DE L'INVENTION

Afin de remédier à l'inconvénient précité de l'état de la technique, la présente invention propose un appareil de détermination du diamètre d'un verre de compensation ophtalmique destiné à être monté sur une monture de lunettes ou de contrôle du montage d'un verre de compensation ophtalmique sur une monture de lunettes tel que défini dans la revendication 1.

Plus particulièrement, on propose selon l'invention un appareil comportant :
- une tablette électronique ayant un écran,
- un support de monture de lunettes, le support de monture de lunettes présentant une ouverture et étant adapté pour maintenir ladite monture de lunettes dans une position déterminée, une face de la monture de lunettes étant placée au voisinage de la surface de l'écran, et
- des moyens de stockage d'au moins une image graphique comportant au moins un repère graphique lié au verre de compensation ophtalmique et/ou au patient destiné à porter le verre de compensation ophtalmique monté sur ladite monture ;
- des moyens de traitement de ladite image adaptés pour générer une image projetée ;
- des moyens d'affichage de ladite image projetée sur l'écran, et
- des moyens d'alignement de ladite monture vis-à-vis de l'image projetée affichée sur l'écran,
- lesdits moyens électroniques d'affichage étant configurés pour permettre à un opérateur de déterminer visuellement un diamètre de verre destiné à être monté sur ladite monture de lunettes par projection d'au moins un cercle de la monture via ladite ouverture vis à vis de la position du au moins un repère graphique correspondant dans l'image projetée affichée sur l'écran ou de contrôler visuellement le montage d'un verre de compensation ophtalmique sur ladite monture de lunettes par projection d'un repère physique lié au verre monté sur ladite monture vis à vis de la position du au moins un repère graphique correspondant dans l'image projetée affichée sur l'écran.

D'autres caractéristiques non limitatives et avantageuses d'un appareil de détermination du diamètre d'un verre de compensation ophtalmique destiné à être monté sur une monture de lunettes ou de contrôle du montage d'un verre de compensation ophtalmique sur une monture de lunettes conforme à l'invention sont les suivantes :
- l'appareil comprend en outre un dispositif de fixation relié mécaniquement au support de monture de lunettes, le dispositif de fixation comprenant une pince de fixation destinée à être fixée sur un bord de la tablette électronique ou un cadre adapté pour entourer la tablette électronique, le cadre comportant une ouverture face à l'écran de la tablette électronique ;
- le support de monture de lunettes est fixe par rapport à l'écran, et les moyens d'alignement comprennent des moyens de traitement d'image adaptés pour modifier l'image graphique affichée de manière à corriger une erreur de parallaxe entre la projection de la monture à travers l'ouverture et l'image graphique affichée sur l'écran ;
- le support de monture de lunettes comporte des repères opto-mécaniques d'alignement et les moyens électroniques d'affichage sont configurés pour afficher des repères graphiques d'alignement correspondants dans l'image affichée sur l'écran ;
- le support de monture de lunettes est monté mobile en rotation autour d'un axe parallèle à l'écran, de manière à réduire une erreur de parallaxe entre la portion de la monture et l'image affichée ;
- l'écran est un écran plat, un écran courbe ayant une courbure concave vers l'extérieur ou un écran flexible ;
- le support de monture de lunettes comporte une pluralité de plots ou pinces de fixation destinés à recevoir et à maintenir la monture de lunettes ;
- le support de monture de lunettes comporte une surface d'appui et une pièce mobile adaptée pour venir en appui contre un pontet médian de ladite monture de lunettes et pour qu'une face de ladite monture de lunettes vienne en contact avec ladite surface d'appui, la monture de lunettes étant maintenue par pression entre la pièce mobile et la surface d'appui.

L'invention propose également un accessoire de tablette électronique pour la détermination du diamètre d'un verre destiné à être monté sur une monture de lunettes ou pour le contrôle du montage d'un verre sur une monture de lunettes tel que défini dans la revendication 7, ledit accessoire comportant :
- un dispositif de fixation destiné à être fixé sur une tablette électronique ayant un écran ; et
- un support de monture de lunettes relié mécaniquement au dispositif de fixation, le support de monture de lunettes étant adapté pour maintenir ladite monture de lunettes dans une position fixe au voisinage de l'écran,
- le dispositif de fixation et le support de monture de lunettes présentant au moins une ouverture entre un cercle de ladite monture dans ladite position fixe, et la surface de l'écran, lorsque le dispositif de fixation est fixé sur la tablette électronique, ladite ouverture étant adaptée pour permettre à un opérateur de visualiser une image graphique affichée sur l'écran de la tablette par projection à travers ladite ouverture, de manière à déterminer le diamètre d'un verre destiné à être monté sur un cercle de ladite monture de lunettes ou à contrôler le montage d'un verre sur ladite monture de lunettes.

Selon des aspects particuliers, l'accessoire de tablette électronique comprend des moyens de rotation du support de monture autour d'une ou deux directions de la surface de l'écran, de manière à compenser un angle pantoscopique de la monture, un angle de galbe de la monture ou un angle de dièdre de la monture.

L'invention propose également un procédé de détermination du diamètre d'un verre de compensation ophtalmique destiné à être monté sur une monture de lunettes tel que défini dans la revendication 9, le procédé comprenant les étapes suivantes :
- disposer une monture de lunettes dans une position prédéterminée sur un support de monture de lunettes d'un appareil selon l'un des modes de réalisation décrits ;
- afficher sur l'écran de la tablette électronique au moins une image graphique d'un contour de verre de diamètre déterminé et de position déterminée ;
- comparer visuellement par projection un cercle de ladite monture et l'image graphique du contour de verre affichée sur l'écran de la tablette électronique ;
- en déduire un diamètre de verre de compensation ophtalmique destiné à être monté sur ladite monture de lunettes.

L'invention propose également une méthode de contrôle du montage d'au moins un verre de compensation ophtalmique sur une monture de lunettes, telle que définie dans la revendication 10, ledit verre comportant au moins un marquage physique, la méthode de contrôle comprenant les étapes suivantes :
- enregistrement d'au moins une image numérique comportant au moins un repère graphique représentatif d'une vue de face du verre de compensation ophtalmique et/ou du patient destiné à porter le verre de compensation ophtalmique monté sur ladite monture ;
- traitement numérique de ladite image adapté pour générer une image projetée ;
- affichage de ladite image projetée sur un écran de tablette numérique ;
- positionnement de la monture comprenant ledit au moins un verre de compensation ophtalmique, une face du verre étant placée sur la surface de l'écran de la tablette,
- alignement de ladite monture vis-à-vis de l'image projetée affichée sur l'écran de manière à permettre un contrôle visuel de la position du au moins un marquage physique par projection vis à vis de la position du au moins un repère graphique correspondant dans l'image projetée affichée sur l'écran.

Selon des aspects particuliers de la méthode de contrôle :
- ladite au moins une image numérique est une image photographique du patient portant la monture de lunettes et le au moins un repère graphique comprend un repère graphique parmi : une position de reflet cornéen, une ligne passant par les centres des deux yeux, une zone de vision de près, un point de vision de loin, un corridor de verre progressif, une ligne horizontale, un centre optique ;
- ladite au moins une image numérique comprend un gabarit de contrôle de la dimension du verre et/ou de la forme du contour du verre, une image de la distribution spatiale de puissance de réfraction du verre de compensation ophtalmique et/ou une image de la distribution spatiale de distorsion du verre de compensation ophtalmique ;
- la méthode comprend en outre une étape d'affichage d'un outil graphique par superposition sur l'image projetée affichée, l'outil graphique étant adapté pour permettre d'évaluer une distance entre la position du au moins un marquage de fabrication et la position du au moins un repère graphique correspondant dans l'image projetée affichée sur l'écran ;
- la méthode comprend en outre une étape supplémentaire d'enregistrement d'un résultat dudit contrôle de préférence sous forme d'un enregistrement d'une image de la monture comprenant le verre de compensation ophtalmique et les marquages de fabrication, la monture étant positionnée sur l'écran de la tablette numérique affichant l'image projetée et le au moins un repère graphique correspondant ;
- la monture comprend deux verres de compensation ophtalmique et on applique la méthode de contrôle simultanément aux deux verres ou successivement à chacun des deux verres.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente une vue d'un appareil pour mesurer le diamètre des cercles d'une monture de lunettes selon l'art antérieur ;
- la figure 2 représente une image en vue de face d'un utilisateur portant une monture de lunettes de présentation ;
- la figure 3 représente une image en vue de face d'un utilisateur portant une monture de lunettes après montage des verres de compensation ophtalmique ;
- la figure 4 représente schématiquement une vue en perspective d'un appareil de mesure du diamètre des cercles d'une monture de lunettes selon un premier mode de réalisation de l'invention ;
- la figure 5 représente une autre vue en perspective d'un appareil de mesure du diamètre des cercles d'une monture de lunettes selon le premier mode de réalisation de l'invention, avec affichage d'une image de l'utilisateur portant la monture de lunettes ;
- la figure 6 représente une autre vue d'une image de l'utilisateur portant la monture de lunettes, munie d'un clip, sur l'appareil de mesure du diamètre des cercles d'une monture de lunettes des figures 4-5 ;
- la figure 7 représente une autre vue d'une image de l'utilisateur, de l'appareil et de la monture posée sur l'appareil selon le 1^{er} mode de réalisation ;
- la figure 8 représente une vue en perspective d'un appareil de mesure du diamètre des cercles d'une monture de lunettes selon un deuxième mode de réalisation de l'invention ;
- la figure 9 illustre le basculement du support de monture de lunettes de l'appareil selon le deuxième mode de réalisation de l'invention ;
- la figure 10 représente une vue en perspective d'un appareil de mesure du diamètre des cercles d'une monture de lunettes selon un troisième mode de réalisation de l'invention ;
- la figure 11A représente un appareil de mesure du diamètre des cercles d'une monture de lunettes selon un quatrième mode de réalisation de l'invention, et la figure 11B un détail du clip de fixation de cet appareil ;
- la figure 12 illustre une vue en coupe transverse d'un écran courbe d'un appareil de mesure du diamètre des verres selon un cinquième mode de réalisation de l'invention ;
- la figure 13 illustre une vue en coupe transverse d'un écran courbe d'un appareil de mesure du diamètre des verres selon une variante du cinquième mode de réalisation de l'invention ;
- la figure 14 illustre une interface graphique d'un appareil de mesure du diamètre des verres selon l'un des modes de réalisation ;
- la figure 15 représente schématiquement un procédé de mesure du diamètre des verres pour une monture selon un mode de réalisation de l'invention.

### Dispositifs

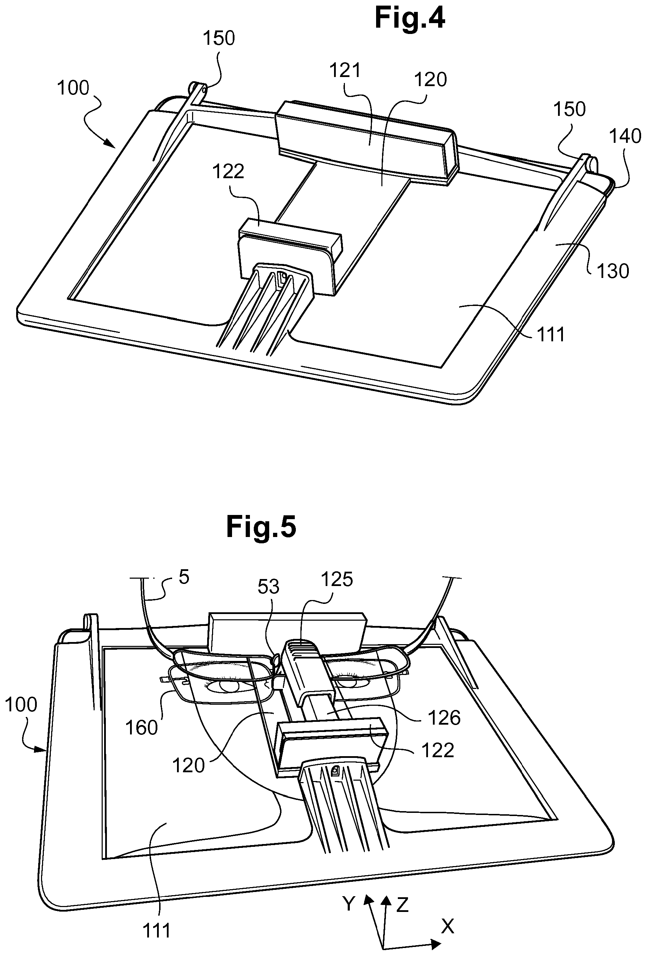

Sur la figure 4, on a représenté une vue en perspective d'un appareil de mesure du diamètre des verres pour une monture de lunettes ou de contrôle du montage de verres sur une monture de lunettes selon un premier mode de réalisation de l'invention. L'appareil 100 comporte une tablette électronique 110 à écran plat 111 et un support de monture de lunettes. De façon particulièrement avantageuse, la tablette électronique 110 est une tablette tactile.

Dans le premier mode de réalisation, le support de monture de lunettes comporte une plaque 120, une première surface d'appui 121, disposée perpendiculairement à la plaque 120 et une pièce de maintien 122. Par exemple, la pièce de maintien 122 coulisse de manière à maintenir la monture de lunettes par pincement contre la surface d'appui 121. Le support de monture permet ainsi de maintenir une monture de lunettes dans une position où le plan de maintien des verres est à proximité de la plaque 120. De préférence, la plaque 120 est une plaque mince (quelques millimètres d'épaisseur) et transparente.

Le support de monture est relié mécaniquement à un cadre 130. Le cadre 130 est fixé sur la tablette électronique. Le cadre 130 délimite une ouverture centrale qui est de préférence de dimension proche ou égale à la dimension de l'écran plat 111. De façon avantageuse, l'ouverture du cadre 130 a une longueur comprise entre 150 et 180 cm et une largeur comprise entre 100 et 140 cm. De préférence, la longueur de l'ouverture du cadre 130 est supérieure à la distance entre les deux branches de la monture de lunettes que l'on souhaite mesurer ou contrôler. Par exemple, le support de monture est fixé au milieu du cadre, dans le sens de la longueur, comme illustré sur la figure 4. Ainsi, le support de monture de lunettes est disposé au voisinage de la surface de l'écran plat 111.

Dans l'exemple illustré sur les figures 4-5, la tablette électronique 110 est enchâssée entre une coque inférieure 140 et le cadre 130. La coque inférieure 140 et le cadre 130 sont reliés par des charnières 150. L'ensemble formé par la coque 140, le cadre 130 et le support de monture de lunettes est ainsi rendu solidaire de l'écran 111 pour la mesure ou le contrôle souhaité, mais cet ensemble reste amovible de la tablette électronique.

De façon alternative, le cadre 130 peut être fixé à la tablette électronique par ses rebords qui viennent s'encliqueter sur les rebords de la tablette électronique entourant l'écran, de manière permanente ou amovible.

Le plan de l'écran 111 est le plan XY.

La figure 5 illustre un exemple d'utilisation de l'appareil de la figure 4 pour le contrôle d'une monture de lunettes équipée de verres. La monture de lunettes 5 est disposée sur le support de monture. Les cercles de la monture 5 et/ou les verres sont en contact avec la plaque 120. La pièce de maintien 122 est équipée d'une tête 125 montée sur un rail de guidage 126. La tête 125 est mobile en translation le long du rail de guidage 126 suivant l'axe Y de manière à venir en appui contre le pontet médian 53, ou pontet nasal, de la monture 5. Un système de rappel, comprenant par exemple un ressort de compression, permet de maintenir la monture de lunettes dans une position fixe. Ainsi, la monture 5 est maintenue dans une position fixe, le plan sagittal de la monture 5 étant perpendiculaire à la surface de l'écran, la monture 5 étant coincée par pression d'une part des cercles contre la surface d'appui 121 et d'autre part du pontet médian 53 contre la tête 125.

L'écran plat 111 de la tablette électronique 110 permet d'afficher une image pré-enregistrée. L'opérateur peut ainsi comparer, par projection, la monture de lunettes 5 disposée sur le support de monture et l'image 160 affichée sur l'écran 111 de la tablette électronique.

Dans l'exemple de la figure 5, avant le montage des verres sur la monture, on a enregistré une première vue de face du porteur avec la monture de lunettes.

L'image affichée est par exemple obtenue à partir d'une image photographique du visage du porteur portant la monture de présentation, sans verre de compensation ophtalmique. Par exemple, l'image est prise au moyen d'une caméra d'un système de mesure de type Visioffice. Lors de l'acquisition d'image, l'opérateur s'assure que le plan d'acquisition est vertical et perpendiculaire au plan sagittal du porteur. De façon avantageuse, lors de cette acquisition d'image, une barre munie de repères graphiques est fixée sur la monture, pour permettre une mise à l'échelle de l'image et une mesure de distance, par exemple de la distance inter-pupillaire.

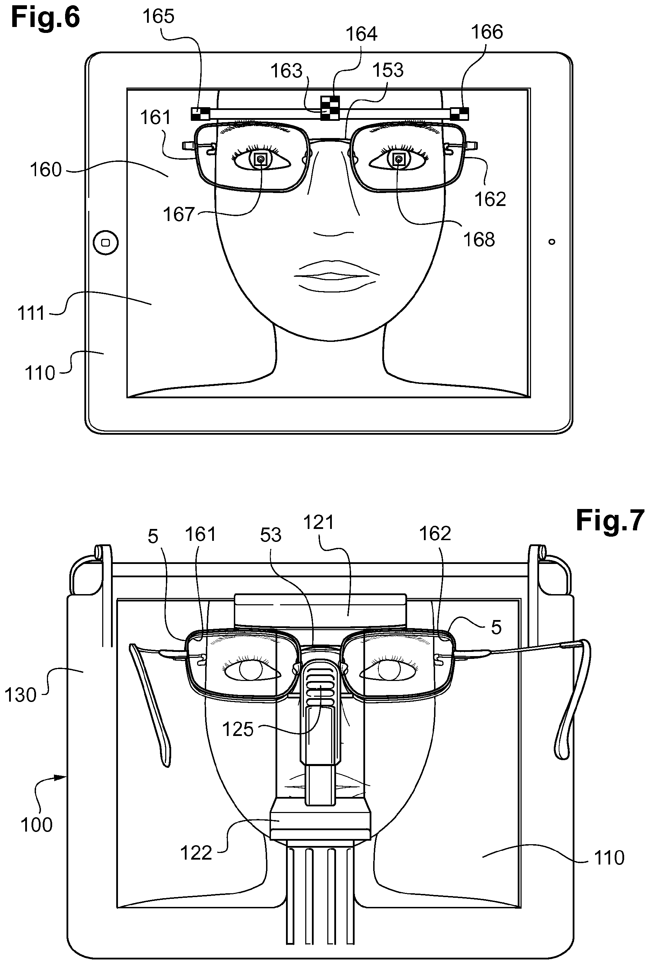

Ainsi, comme illustré à titre d'exemple sur la figure 6, on affiche sur l'écran 111 une image 160 comprenant l'image des cercles droit 161, respectivement gauche 162, de la monture, l'image du pontet médian 153, la position de la pupille de l'œil droit 167, respectivement la position de la pupille de l'œil gauche 168 du porteur. Avantageusement, l'image 160 comporte plusieurs repères graphiques 163, 164, 165, 166 liés à l'image de la monture de lunettes. Connaissant la taille de l'écran 111, les repères graphiques permettent d'afficher une image 160 aux dimensions de la taille réelle de la monture. De manière alternative, l'accès à une mesure complémentaire de la distance inter-pupillaire du porteur en vision de loin permet une remise à l'échelle 1 de l'image 160, à partir des positions des images des pupilles de l'œil droit 167 et gauche 168 du porteur.

Dans le cas où l'on ne dispose pas d'une image du visage du porteur portant la monture, on utilise un système informatique pour générer une image comportant la monture et le positionnement des yeux, par exemple à partir d'une base de données des montures de lunettes et d'une base de données de mesures de centrage des yeux du porteur.

Nous détaillerons plus loin les étapes de traitement de cette image, pour permettre un alignement entre la monture de lunettes 5 et l'image affichée, ainsi que pour corriger des effets de parallaxe dus au galbe de la monture de lunettes et/ou au galbe des verres.

La figure 7 représente une autre vue de l'appareil et de la monture posée sur l'appareil selon le premier mode de réalisation. Le cadre 130 est fixé sur la tablette électronique. La monture 5 est posée sur le support de monture. La tête 125 de la pièce de maintien 122 vient en appui contre le pontet médian 53 de la monture 5, de manière à ce que les cercles de la monture viennent en butée contre la surface d'appui 121. Ainsi, le plan sagittal de la monture 5 est perpendiculaire à la surface de l'écran. On affiche sur l'écran 111 l'image de l'utilisateur portant la monture de lunettes, le système d'affichage tenant compte de la projection de l'image sur la surface de l'écran. Par projection, comme illustré sur la figure 7, un opérateur peut comparer visuellement la position de la monture 5 vis-à-vis de l'image projetée sur la surface de l'écran. L'opérateur peut ainsi procéder à un ajustement fin de la position relative de la monture par rapport à l'image affichée, en modifiant la position de la monture dans le support et/ou en modifiant la position et l'orientation de l'image affichée sur l'écran. L'opérateur peut ensuite procéder à l'évaluation visuelle de la position des repères liés à la monture 5 ou aux verres montés sur cette monture par rapport aux repères graphiques affichés sur l'image projetée sur l'écran.

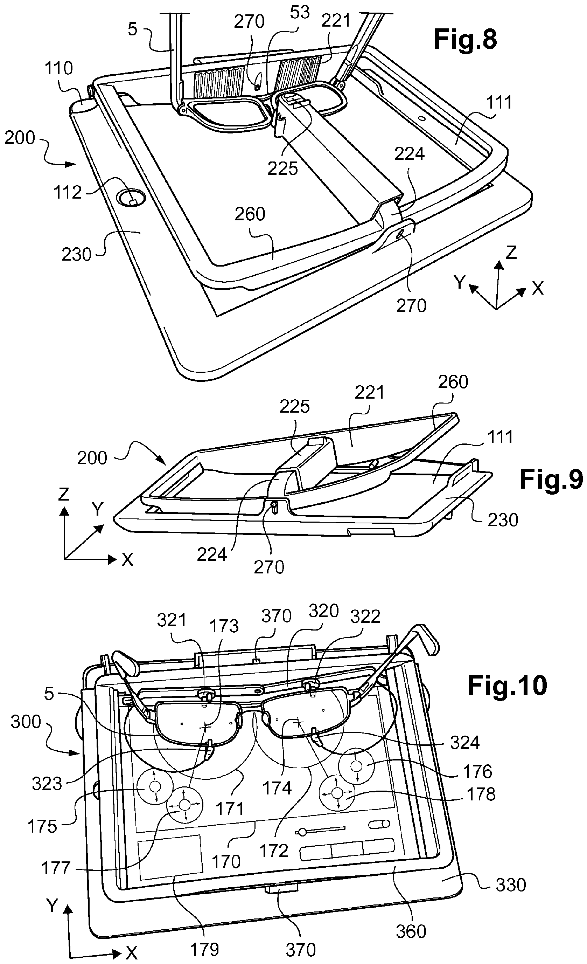

La figure 8 représente schématiquement un deuxième mode de réalisation de l'invention d'un appareil 200 de mesure du diamètre des cercles d'une monture de lunettes ou de contrôle du montage de verres de compensation ophtalmiques sur une monture de lunettes.

L'appareil 200 de contrôle ou de mesure comporte une tablette tactile 110 à écran plat 111. Un cadre 230 ayant une ouverture aux dimensions de l'écran plat 111 est fixé sur la tablette tactile 110. Le cadre 230 peut comporter d'autres ouvertures, telle qu'une ouverture 112 permettant à l'opérateur d'accéder à une touche de commande ou à une caméra intégrée à la tablette électronique.

L'appareil 200 comporte aussi un support de monture 260, qui comprend une surface d'appui 221, un rail de guidage 224 et une tête 225. La surface d'appui 221 est avantageusement tangente à une parallèle à un bord de l'écran 111. Le rail de guidage 224 est sensiblement transverse à la surface d'appui 221 et disposé au milieu du support de monture 260. La tête 225 est montée mobile en translation le long du rail de guidage 224, de manière à ce que la tête 225 vienne en appui contre le pontet médian 53 de la monture de lunettes 5, tandis qu'une surface tangente aux cercles de la monture vient en appui contre la surface d'appui 221. Préférentiellement, on dispose des patins antidérapants sur la surface de maintien 221 et/ou sur la tête 225 pour éviter les glissements de la monture de lunettes. Un système de maintien en position, par exemple à ressort de compression, permet d'appliquer une force entre le rail de guidage 224 et la tête 225, de manière à ce que la tête exerce une force de pression sur la monture. Ainsi, la monture de lunettes 5 est maintenue dans une position fixe par rapport au support de monture 260, le plan sagittal de la monture étant perpendiculaire à la surface de l'écran.

Dans le deuxième mode de réalisation, le support de monture 260 est relié mécaniquement au cadre 230, par l'intermédiaire d'un axe de rotation 270.

De façon particulièrement avantageuse, comme illustré sur la figure 9, l'axe de rotation du support de monture 260 est parallèle et aligné sur l'axe Y du rail de guidage 224 pour permettre un basculement de la monture de lunettes autour d'un axe Y passant par le plan sagittal de la monture de lunettes 5. Dans l'exemple illustré sur les figures 8 et 9, l'axe de rotation est formé de deux pions cylindriques 270 encastrés dans le cadre 230 et dans le support de monture 260, les pions 270 étant disposés respectivement au niveau de la surface d'appui 221 et d'une extrémité du rail de guidage 224. Selon le sens de rotation, le support de monture 260 permet de rapprocher de la surface de l'écran soit le cercle droit de la monture, soit le cercle gauche. Le mouvement de bascule de support de monture 260 permet ainsi de réduire ou de compenser les effets de la parallaxe entre une monture courbe et l'image affichée sur l'écran. L'amplitude du mouvement de rotation du support de monture 260 est comprise de + 10 à - 10 degrés autour de l'axe de rotation 270.

De façon avantageuse, l'écran tactile permet de détecter un contact entre la monture et l'écran tactile lors d'un basculement du support de monture. La détection de la position du point de contact permet au système de traitement de détecter automatiquement si le support de la monture est basculé vers le cercle gauche de la monture ou vers le cercle droit.

La figure 10 représente une vue en perspective d'un appareil de mesure du diamètre des cercles d'une monture de lunettes selon un troisième mode de réalisation de l'invention. Ce troisième mode de réalisation diffère du deuxième mode de réalisation par le support de la monture de lunettes.

De manière analogue aux précédents modes de réalisation, l'appareil 300 de contrôle ou de mesure comporte une tablette tactile à écran plat, un cadre 330 fixé sur les bords de la tablette de manière à présenter une ouverture environ aux dimensions de l'écran et un support de monture.

Le support de monture 360 comporte un cadre sur lequel est fixée une barre 320 qui peut être rectiligne ou formée de deux sections rectilignes reliées par une articulation. La barre 320 est reliée à un ensemble de plots de soutien 321, 322 et/ou de pinces de fixation 323, 324 destinés à recevoir et à maintenir la monture de lunettes 5 dans une position fixe par rapport au support 360. A titre d'exemple, les pinces de fixation 323, 324 sont reliées à la barre 320 par l'intermédiaire de liaisons semi-rigides. L'articulation de la barre 320 permet d'adapter le support de monture au galbe de la monture de lunettes.

Dans l'exemple illustré sur la figure 10, le support de monture est monté mobile en rotation par rapport au cadre 330 fixé sur la tablette tactile. Le support 360 est monté mobile en rotation autour d'un axe de rotation parallèle à un axe Y médian du cadre 330 ou de la tablette tactile. Dans l'exemple illustré sur la figure 10, l'axe de rotation est formé de deux pions cylindriques 370 encastrés dans le cadre 330 et dans le support de monture 360, les pions 370 étant disposés respectivement sur des côtés opposés du cadre 330.

Dans autre une variante non représentée, le support de monture 360 peut-être fixé de manière rigide sur la cadre 330 fixé sur la tablette tactile.

Ce troisième mode de réalisation permet de positionner la monture avec un angle pantoscopique conforme à l'angle pantoscopique mesuré sur un instrument de type visioffice.

Ce troisième mode de réalisation permet de laisser une grande ouverture visuelle pour l'opérateur face à l'écran tactile, le support de la monture n'obturant pas la partie centrale de l'écran tactile.

Sur la figure 10 on observe une image 170 affichée sur l'écran tactile. L'image 170 illustre un procédé de mesure du diamètre des contours des cercles de la monture, afin de déterminer le diamètre des verres destinés à être montés sur cette monture de lunettes.

L'image 170 représente un cercle gauche 171 de centre 173 et un cercle droit 172 de centre 174. Différents boutons tactiles 175-178 apparaissent sur la surface de l'écran tactile. Les boutons tactiles 175, respectivement 176, permettent à l'opérateur, par des actions tactiles de type glisser-déplacer, de modifier le diamètre du cercle gauche 171, respectivement le diamètre du cercle droit 172. De manière analogue, les boutons tactiles 177, respectivement 178, permettent à l'opérateur de modifier la position du centre 173 du cercle gauche 171, respectivement la position du centre 174 du cercle du cercle droit 172.

L'interface tactile permet ainsi facilement à l'opérateur de centrer et d'ajuster le diamètre des cercles affichés dans l'image 170 en fonction des contours des cercles de la monture 5 maintenue à proximité de l'écran.

L'image 170 représente un seul cercle pour chaque verre, ce qui permet une meilleure lisibilité du diamètre pour l'opérateur, par comparaison avec les cartes pré-imprimées de l'art antérieur, sur lesquelles est représentée une pluralité de cercles concentriques, qui peuvent être difficiles à distinguer. L'appareil de l'invention, grâce à la simplicité et la clarté de son interface graphique évite ainsi des erreurs de mesure de diamètre des cercles de la monture.

De façon particulièrement avantageuse, l'appareil 300 permet de calculer la distance entre les centres 173 et 174 des cercles et d'afficher cette mesure dans une zone 179 de l'écran tactile, où apparaissent aussi par exemple des mesures enregistrées d'écart pupillaire gauche et droit du porteur. Le dispositif 300 permet ainsi à l'opérateur de vérifier la compatibilité de la mesure de diamètre des verres avec d'autres mesures physiologiques liées au porteur, sans requérir la présence du porteur.

Dans une variante, l'appareil comporte aussi des moyens permettant de prendre en compte l'angle de dièdre de la monture et/ou l'angle de bascule du support de monture. Par exemple, l'écran tactile comporte des boutons tactiles pour sélectionner : un angle de dièdre de la monture compris entre 0 et 5 degrés, le galbe du verre compris par exemple entre une base 0 et 10 degrés, et/ou pour indiquer un angle de bascule du support de la monture de 0 degrés, + ou - 10 degrés.

Le système de traitement d'image prend en compte les informations enregistrées via l'écran tactile pour corriger l'image affichée et/ou pour moduler la mesure des diamètres de verres.

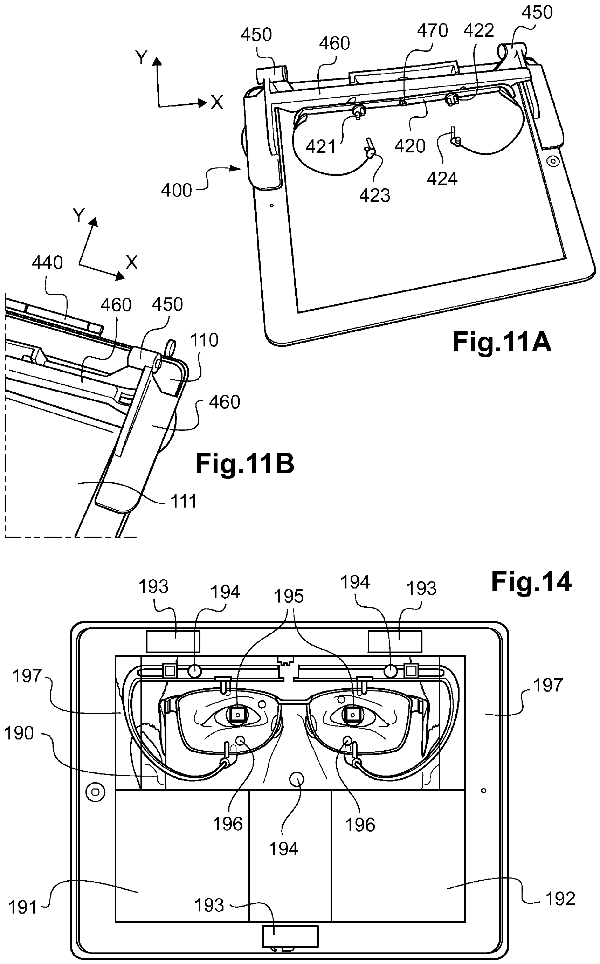

Les figures 11A-11B représentent un appareil de mesure du diamètre des cercles d'une monture de lunettes selon un quatrième mode de réalisation de l'invention.

Dans ce mode de réalisation, le support de la monture comporte une pièce 460 sur laquelle est fixée une barre 420, rectiligne ou en deux sections rectilignes articulées. Comme dans le mode de réalisation précédent, des plots 421, 422 et/ou pinces de fixation 423, 424, reliés à la barre 420, sont destinés à recevoir et à maintenir les cercles d'une monture de lunettes.

La pièce 460 est reliée à une autre pièce 440, par exemple par l'intermédiaire de charnières 450, dont la partie dormante est solidaire de la pièce 440 et la partie mobile est solidaire de la pièce 460, mobile en rotation autour d'un axe, par exemple parallèle à l'axe X. L'ensemble constitué des pièces 440, 450 et 460 forme une pince ou un clip de fixation, qui vient se fixer par pincement ou magnétiquement sur le bord d'une tablette tactile 110. Un tel accessoire offre l'avantage d'une grande ergonomie lors du montage et du démontage d'un accessoire 400 sur une tablette tactile.

Le mode de réalisation illustré sur la figure 11A-11B permet de disposer d'un accessoire 400 pour tablette tactile compatible avec différentes tailles de tablettes et facile à mettre en place.

L'accessoire 400 pour tablette tactile comporte de préférence trois points de contact, ce qui permet d'assurer une précision de positionnement et de centrage de la monture par rapport au référentiel de l'écran de la tablette. Ces trois points de contact permettent un repositionnement répétable de l'accessoire 400. Ainsi, il est plus facile d'orienter et de centrer correctement l'image.

De façon particulièrement avantageuse, le support 460 de la monture de lunettes peut basculer autour d'un axe 470 (voir figure 11A) de droite à gauche afin de limiter l'effet de parallaxe. Dans ce cas le mouvement de rotation est transformé en une translation du support afin d'être détecté et enregistré par l'écran tactile de la tablette (fonction slider). Simultanément, l'image affichée est coupée par son plan sagittal et dilatée dans la direction X en fonction de la rotation afin de compenser l'effet de projection.

De façon optionnelle, l'appareil permet de positionner la monture avec un angle pantoscopique conforme à celui mesuré, par exemple sur un instrument de type visioffice.

Dans un cinquième mode de réalisation, l'appareil comporte un écran courbe. Des téléphones intelligents ou des tablettes tactiles ayant un écran courbe de courbure concave sont désormais disponibles commercialement. On peut citer par exemple les technologies d'écran oled qui permettent de fabriquer un écran incurvé.

Plus précisément, l'écran 113 a une surface cylindrique, l'axe de ce cylindre étant parallèle à l'axe Y de projection. L'écran 113 forme ainsi une surface cylindrique de projection des images.

On place une monture de lunettes 25 ou 35 contre la surface courbe d'un écran 113, le plan sagittal 253 de la monture 25, 35 comprenant l'axe de courbure de l'écran 113.

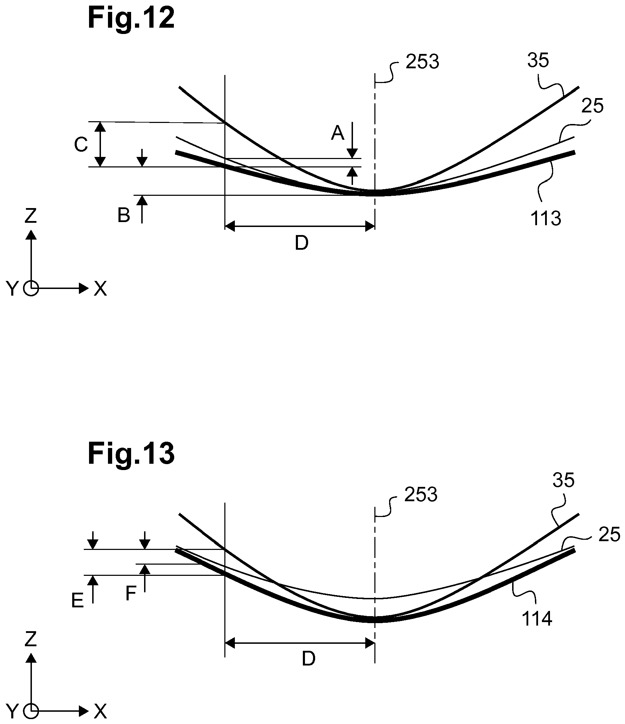

La figure 12 illustre une vue en coupe d'un écran courbe 113 dans un plan XZ, transverse à l'axe du cylindre de l'écran 113. Une première monture de lunettes 25 a un angle de galbe relativement modéré et une deuxième monture de lunettes 35 a un angle de galbe plus important. De préférence, dans la variante illustrée sur la fig. 12, la courbure de l'écran est inférieure à la courbure des montures 25, 35.

Le pontet médian des montures 25, 35 est placé au centre de l'écran 113. Le plan sagittal 253 des montures 25, 35 est transverse au plan de la figure 12. Le plan de la figure 12 correspond à peu près au plan de Fraunhofer lorsque l'utilisateur porte la monture de lunettes 25 ou 35.

A une distance D du plan sagittal 253 de la première monture 25, la distance entre la surface de l'écran courbe 113 et la première monture 25 est égale à A suivant l'axe de projection Z. Par comparaison, la distance entre la première monture 25 et un écran plat serait égale à A+B.

De même, à la distance D du plan sagittal 253 de la deuxième monture 35, la distance entre la surface de l'écran courbe 113 et la deuxième monture 35 est égale à C suivant l'axe de projection Z. Par comparaison, la distance entre la deuxième monture 35 et un écran plat serait égale à C+B. L'écran courbe 113 permet ainsi de réduire la distance d'une valeur B, quelle que soit la courbure de la monture 25, 35. L'écran courbe 113 permet donc de réduire les erreurs de parallaxe lors de la détermination du diamètre d'une lentille, ou lors du contrôle du montage d'une lentille dans une monture de lunettes. L'écran courbe 113 permet ainsi d'augmenter la précision de la mise en correspondance entre les éléments physiques attachés à la monture ou aux verres et les éléments de repères graphiques affichés sur la surface de l'écran courbe 113.

De façon avantageuse, l'algorithme de projection des images sur l'écran courbe 113 prend en compte la courbure de l'écran 113 pour compenser la parallaxe résiduelle entre la surface de l'écran et la monture 25, respectivement 35.

La figure 13 illustre une variante du cinquième mode de réalisation, selon laquelle l'écran cylindrique 114 présente une courbure égale à une valeur moyenne de courbure de monture de lunettes. On place la monture de lunettes 25, respectivement 35, contre la surface incurvée de l'écran 114. Par exemple, l'écran 114 a une courbure supérieure à la courbure de la première monture 25 et inférieure à la courbure de la deuxième monture 35.

A la distance D du plan sagittal 253 de la première monture 25, la distance entre la surface de l'écran courbe 114 et la première monture 25 est égale à E suivant l'axe de projection Z. A la distance D du plan sagittal 253 de la deuxième monture 35, la distance entre la surface de l'écran courbe 114 et la deuxième monture 35 est égale à F suivant l'axe de projection Z. Cette variante permet de réduire fortement la parallaxe notamment pour les montures ayant une très forte courbure, telle que la deuxième monture 35. Néanmoins, pour la première monture 25, la zone d'ajustement centrale autour du pontet médian subit un éloignement par rapport à la surface de l'écran 114.

Dans une autre variante de ce cinquième mode de réalisation, l'écran est un écran souple, par exemple de type oled. L'opérateur peut modifier la courbure de l'écran souple selon les besoins, par exemple pour conformer la courbure de l'écran à la courbure de la monture considérée. De manière avantageuse dans ce cas, le système électronique détecte la courbure effective de l'écran de manière à adapter l'image affichée sur l'écran en fonction de la forme exacte de l'écran.

### Procédés

L'appareil de mesure du diamètre de verres ophtalmique ou de contrôle du montage d'un verre de compensation ophtalmique sur une monture de lunettes comporte une partie matérielle, fixée sur une tablette tactile, telle que décrite en lien avec les modes de réalisation illustrés aux figures 4-13.

L'appareil comporte aussi un logiciel, qui permet d'obtenir la précision nécessaire à la mesure du diamètre des cercles d'une monture de lunettes ou au contrôle du montage des verres de compensation ophtalmique sur une monture de lunettes.

### A- Procédé de mesure du diamètre de verres ophtalmique destinés à être montés sur une monture de lunettes

La figure 14 illustre une interface graphique d'un logiciel d'aide à la mesure du diamètre des verres au moyen d'un appareil selon l'un des modes de réalisation de l'invention, installé sur une tablette électronique.

L'écran, par exemple plat, de la tablette forme une image plane.

Or, la monture de lunette présente en général un angle de dièdre ou une courbure et les cercles de la monture peuvent aussi ne pas être inscrits dans un plan.

Dans la direction transverse, dans le plan sagittal de la monture, les lunettes peuvent aussi être inclinées en fonction d'un coefficient œil-tête du porteur et/ou de l'angle pantoscopique de la monture de lunettes.

L'opérateur observe la projection de la monture de lunettes ou d'un cercle de la monture de lunettes sur l'image affichée sur l'écran plat.

Une première étape consiste à aligner l'image par rapport à la monture par des opérations de translation et/ou rotation de l'image commandées par contact avec l'écran tactile.

Une deuxième étape concerne le traitement des erreurs de parallaxe. L'angle physique entre la surface de l'écran et la monture et/ou les cercles est susceptible d'induire une erreur de parallaxe qui peut conduire à des erreurs de lecture du diamètre de verre sur l'image affichée. Dans le cas où les angles de dièdre sont non négligeables, et en particulier pour les montures à fort dièdre, on utilise un support de monture à bascule, qui peut pivoter à droite puis à gauche, de manière à rapprocher le cercle droit, respectivement gauche, de la surface de l'écran plat.

Dans le mode de réalisation illustré sur la figure 10, l'opérateur indique via l'interface tactile 111, l'angle de dièdre de la monture, l'angle de galbe des verres sélectionnés. L'angle de dièdre peut être mesuré par ailleurs, par exemple sur un instrument de type Visioffice. De plus, le cas échéant, l'opérateur indique si le support de monture est basculé du côté du cercle droit ou gauche de la monture. De manière alternative, l'appareil dispose de ces informations par une base de données monture, ou via des capteurs, par exemple par contact entre l'écran tactile et le support de monture à bascule ou la monture.

Ensuite, le système de traitement d'image déforme l'image affichée par demi-image, respectivement droite ou gauche, en fonction de l'angle de dièdre enregistré ou sélectionné et en fonction du sens de pivotement du support de monture. Par exemple, on déforme l'image par une projection angulaire de type : L*cosα de manière à rattraper l'angle de projection en fonction de la distance L au plan sagittal de la monture. L'image affichée n'est plus un cercle parfait, mais la projection d'un cercle sur une surface.

Ainsi, le logiciel de traitement et d'affichage d'image permet de corriger les effets de distorsion par parallaxe.

### B - Procédé de contrôle du montage d'un verre de compensation ophtalmique sur une monture de lunettes

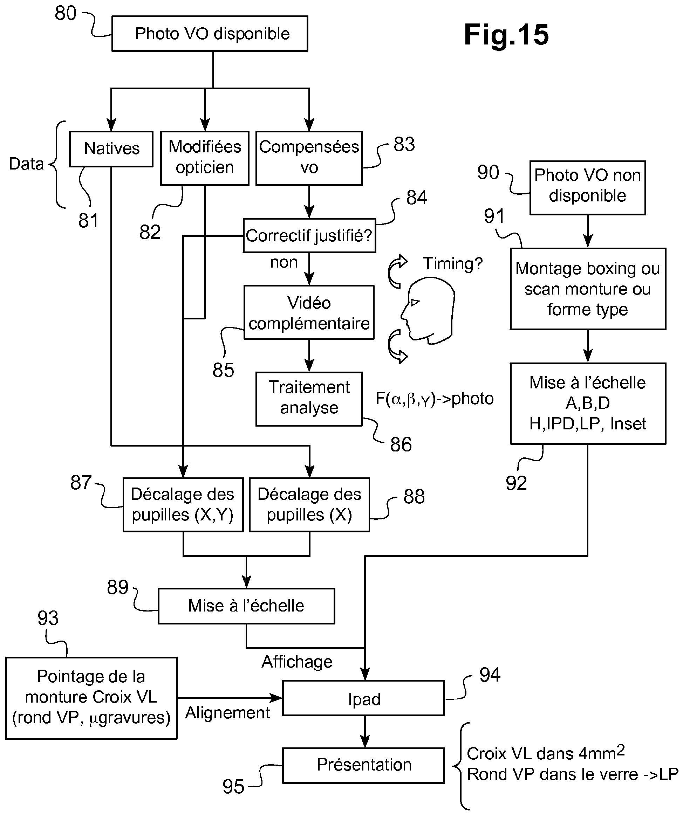

La figure 15 représente schématiquement les étapes d'un procédé de contrôle du montage d'un verre basé sur l'utilisation d'un appareil et procédé de l'invention.

Dans une première étape, on détermine si une image, en vue de face, du porteur portant la monture de présentation est disponible.

Dans le cas où une telle image est disponible, on démarre le procédé à l'étape 80.

Dans le cas où une telle image n'est pas disponible, on démarre le procédé à l'étape 90.

### B1- Cas où une première image du porteur est disponible (étapes 80-89)

On enregistre une image ou une séquence vidéo du visage du porteur portant la monture de présentation, c'est-à-dire sans verre de compensation ophtalmique, prise par exemple au moyen de la caméra d'un appareil de type Visioffice (étape 80). Le plan d'acquisition de cette image est en général vertical et perpendiculaire au plan sagittal du porteur.

On peut utiliser les données brutes issues de cette image (étape 81), ou si nécessaire appliquer une correction des effets de projection et de précision (étapes 82-86).

Par exemple, dans le cas où l'image du visage du porteur avec monture provient d'une caméra du Visioffice, on corrige la position des reflets cornéens d'éventuels effets de convergence du regard ou de décalage en hauteur, soit de manière manuelle par l'opticien (étape 82), soit automatiquement (étape 83).

On vérifie que la correction appliquée est justifiée à l'étape 84. Le contrôle de position de la pastille de vision de près (65, 66) nécessite une précision d'alignement au contour notamment pour éviter de cumuler une erreur d'alignement des demi écarts-pupillaires à une erreur de mesure du bas de la monture.

Une première solution consiste à utiliser une forme scannée de monture avec précision par un traceur et à repositionner le point de vision de loin dans cette forme scannée afin de vérifier la position théorique de la pastille de vision de près (VP).

De manière alternative, on effectue un nouveau marquage de la position de la pastille VP sur les verres de la monture pour permettre un contrôle visuel de la position de celle-ci à l'intérieur du cercle de la monture.

A l'étape 87, respectivement 88, on corrige les effets de parallaxe sur l'image du porteur, par un décalage de la position des pupilles suivant une direction X par rapport au plan sagittal du porteur et/ou suivant les deux directions X et Y (voir figure 14).

Enfin à l'étape 89, l'image est mise à l'échelle, en fonction de la taille et de la résolution de l'écran de la tablette tactile.

Enfin, on affiche l'image mise à l'échelle sur l'écran de la tablette tactile (étape 94).

La figure 14 représente un exemple d'image affichée, dans la zone 190 de l'écran d'une tablette tactile. Les zones 193 correspondent aux trois points de fixation du support de monture sur la tablette.

Le système de traitement indique automatiquement des carrés 195 (ou boxing) entourant les pupilles du porteur, ainsi que des repères de centrage 194, et la position des zones de vision de près 196.

Une partie de l'écran tactile 191, 192 est affectée aux interactions avec l'opérateur pour permettre par exemple l'alignement de l'image.

Les zones latérales 197 permettent à l'opérateur de déplacer l'image affichée.

### B2- Cas où une première image du porteur n'est pas disponible (étapes 90-92)

Si une image du visage du porteur portant la monture n'est pas disponible, le système de traitement génère une image comportant la monture et le positionnement des yeux du porteur (étape 91).

L'image de la monture peut être générée à partir d'une image scannée ou de l'assemblage de formes génériques ou d'une base de données montures. On collecte le positionnement des yeux du porteur à partir des mesures de centrage effectuées sur le porteur.

Puis le système de traitement met à l'échelle cette image générée, en fonction des mesures disponibles liées au porteur et à la monture de lunettes telles que : la hauteur de montage, l'écart inter-pupillaire du porteur et/ou le déport interne (ou inset) d'un verre progressif, c'est-à-dire le décalage horizontal entre le point de référence pour la vision de loin et le point de référence pour la vision de près.

Enfin, on affiche cette image de synthèse mise à l'échelle sur l'écran de la tablette tactile (étape 94) (voir par exemple l'image affichée sur la figure 6).

### Préparation de la monture munie des verres de compensation ophtalmique (étape 93)

De préférence, après le montage des verres, on effectue un marquage de la monture et des verres pour faire apparaître les micro-gravures de la monture et les points de centrage (63, 64) et un marquage des verres en vision de loin et en vision de près (comme illustré par exemple sur la figure 3).

### Mise en place de la monture dans l'appareil de contrôle sur l'écran (étape 95)

Par exemple, dans le cas où l'image du visage du porteur avec monture provient d'une caméra d'un appareil Visioffice.

La monture doit être inclinée suivant l'angle pantoscopique mesuré au Visioffice et disponible dans un fichier partagé.

L'invention propose de faciliter l'alignement du cercle de la monture avec la monture contenue dans l'image. Le support monture peut pivoter suivant l'angle pantoscopique par un curseur de défilement (slider) de type pan incliné, optionnellement le curseur de défilement est codé par le contact avec l'écran tactile.

L'opérateur peut aligner l'image complète affichée par rapport à la monture réelle via des mouvements de translation et/ou rotation générés par contact avec l'écran tactile.

Dans le cas où les angles de dièdre sont suffisants pour générer de la parallaxe, en particulier pour les montures à fort dièdre, le support monture peut pivoter à droite puis à gauche. Dans ce cas, l'image est déformée par moitié en fonction de la valeur du dièdre mesuré et du sens de pivotement du support monture, détecté par exemple automatiquement par contact avec l'écran.

Optionnellement on affiche sur l'écran, un œilleton d'aide à l'alignement avec le reflet cornéen, pour un meilleur positionnement et centrage de cet œilleton.

De façon optionnelle, pour un porteur ayant une inclinaison de la tête (Head-cap) supérieur à 5 degrés, l'opérateur incline mécaniquement la monture du même angle sur le support de monture.

L'opérateur peut ainsi contrôler la position des repères graphiques sur l'image affichée et la position des marquages physiques apparents sur la monture et/ou sur les verres afin de contrôler par exemple la position des centres des pupilles en vision de loin par rapport à la croix de montage, la position des pastilles de vision de près, la hauteur de montage des verres par rapport au bord inférieur de la monture, et l'alignement de la monture de lunettes par rapport au plan de Francfort du porteur.

En cas de défaut d'alignement, l'opticien peut identifier et quantifier le défaut de fabrication, ce qui permet un réajustement ou une correction rapide du défaut.

Ce procédé permet un contrôle à la fois précis et complet du montage de verres de compensation ophtalmique sur une monture de lunettes et ne nécessite pas la présence du porteur auprès de l'opticien.

De manière optionnelle, le système comporte des fonctions d'ergonomie.

De façon avantageuse, en fonction d'un accès à une base de données du verre choisi, l'interface du logiciel présente le diamètre de verre maximum disponible dans la base. Cette fonction permet d'identifier un verre qui correspond à la monture choisie, et donc un contrôle rapide de la faisabilité de l'équipement.

Supposons que le diamètre évalué, selon la précision permise par l'effet de la parallaxe, est situé entre deux valeurs discrètes de diamètres de verre disponibles en pratique : par exemple on évalue le diamètre du verre à 67 mm alors que les diamètres de verres disponibles dans la gamme sont de 65mm ou de 70mm. De préférence, l'interface graphique du logiciel affiche le contour du diamètre compatible de 70 mm en vert (ou le logiciel émet un autre code équivalent), ce diamètre fournissant une marge d'ajustement sans risque au montage. Au contraire si le diamètre est proche de la valeur exacte du verre, suivant un seuil prédéfini, l'interface graphique du logiciel affiche le diamètre du verre proposé par exemple en orange (ou le logiciel émet un autre type d'alerte) permettant à l'opérateur d'apporter l'attention nécessaire à cette situation où les tolérances de montage sont réduites.

Dans un mode de réalisation préféré, le support de monture est fixe par rapport à la tablette (sans mode bascule) et le support de monture comporte des repères opto-mécaniques intégrés. Par exemple, le support de monture comporte des repères opto-mécaniques, tels que des trous et/ou des fentes de visée, distribués dans des directions transverses, horizontale et verticale. Ces repères opto-mécaniques permettent de guider le regard de l'opérateur et de viser des repères graphiques correspondants incrustés dans l'image affichée sur l'écran. Les repères opto-mécaniques du support de monture coopèrent avec les repères graphiques de l'image de manière à permettre à l'opérateur de se positionner face à l'écran lors de la mesure, ce qui permet de fixer l'axe de visée, de prédire l'influence de la parallaxe et ainsi de la compenser.

## Revendications

1. Appareil (100, 200, 300, 400) de détermination du diamètre d'un verre de compensation ophtalmique destiné à être monté sur une monture de lunettes (5) ou de contrôle du montage d'un verre de compensation ophtalmique sur une monture de lunettes (5), **caractérisé en ce que** l'appareil comporte :
- une tablette électronique (110) ayant un écran (111, 113, 114),
- un support de monture de lunettes, le support de monture de lunettes présentant une ouverture et étant adapté pour maintenir ladite monture de lunettes (5) dans une position déterminée, une face de la monture de lunettes (5) étant placée au voisinage de la surface de l'écran (111, 113, 114), le support de monture de lunettes étant adapté pour permettre un basculement de la monture de lunettes autour d'un axe Y passant par le plan sagittal de la monture de lunettes, pour pivoter à droite et à gauche, de manière à rapprocher le cercle droit, respectivement gauche de la monture de lunettes, de la surface de l'écran plat,
et
- des moyens de stockage d'au moins une image graphique comportant au moins un repère graphique lié au verre de compensation ophtalmique et/ou au patient destiné à porter le verre de compensation ophtalmique monté sur ladite monture ;
- des moyens de traitement de ladite image adaptés pour déformer ladite image par demi-image en fonction d'un angle de dièdre de la monture de lunettes (5) et en fonction du sens de pivotement du support de monture de manière à générer une image projetée ;
- des moyens d'affichage de ladite image projetée (160, 170, 180, 190) sur l'écran (111), et
- des moyens d'alignement de ladite monture vis-à-vis de l'image projetée affichée sur l'écran (111, 113, 114),
- lesdits moyens électroniques d'affichage étant configurés pour permettre à un opérateur de déterminer visuellement un diamètre de verre destiné à être monté sur ladite monture de lunettes par projection d'au moins un cercle de la monture via ladite ouverture vis à vis de la position du au moins un repère graphique correspondant dans l'image projetée affichée sur l'écran ou de contrôler visuellement le montage d'un verre de compensation ophtalmique sur ladite monture de lunettes par projection d'un repère physique lié au verre monté sur ladite monture vis à vis de la position du au moins un repère graphique correspondant dans l'image projetée affichée sur l'écran.

2. Appareil de détermination du diamètre d'un verre ou de contrôle du montage d'un verre sur une monture de lunettes selon la revendication 1 comprenant en outre un dispositif de fixation (140, 150, 230, 440, 450) relié mécaniquement au support de monture de lunettes, le dispositif de fixation comprenant une pince de fixation (440, 450) destinée à être fixée sur un bord de la tablette électronique (110) ou un cadre (140, 150, 230) adapté pour entourer la tablette électronique, le cadre comportant une ouverture face à l'écran (111) de la tablette électronique (110).

3. Appareil de détermination du diamètre d'un verre ou de contrôle du montage d'un verre sur une monture de lunettes selon l'une des revendication 1 à 2 dans lequel le support de monture de lunettes (260, 360) est monté mobile en rotation autour d'un axe (270, 370) parallèle à l'écran, de manière à réduire une erreur de parallaxe entre la portion de la monture et l'image affichée.

4. Appareil de détermination du diamètre d'un verre ou de contrôle du montage d'un verre sur une monture de lunettes selon l'une des revendication 1 à 3 dans lequel l'écran (111) est un écran plat, un écran courbe (113, 114) ayant une courbure concave vers l'extérieur ou un écran flexible.

5. Appareil de détermination du diamètre d'un verre ou de contrôle du montage d'un verre sur une monture de lunettes selon l'une des revendication 1 à 4 dans lequel le support de monture de lunettes (360, 460) comporte une pluralité de plots ou pinces de fixation (321, 322, 323, 324, 421, 422, 423, 424) destinés à recevoir et à maintenir la monture de lunettes.

6. Appareil de détermination du diamètre d'un verre ou de contrôle du montage d'un verre sur une monture de lunettes selon l'une des revendications 1 à 4 dans lequel le support de monture de lunettes comporte une surface d'appui (121, 221) et une pièce mobile (125, 225) adaptée pour venir en appui contre un pontet médian (53) de ladite monture de lunettes (5) et pour qu'une face de ladite monture de lunettes (5) vienne en contact avec ladite surface d'appui (121, 221), la monture de lunettes (5) étant maintenue par pression entre la pièce mobile (125, 225) et la surface d'appui (121, 221).

7. Accessoire de tablette électronique pour la détermination du diamètre d'un verre destiné à être monté sur une monture de lunettes ou pour le contrôle du montage d'un verre sur une monture de lunettes, ledit accessoire comportant :
- un dispositif de fixation (130, 140, 230, 330, 340, 430, 440) destiné à être fixé sur une tablette électronique ayant un écran plat (111, 113, 114) ; et
- un support de monture de lunettes relié mécaniquement au dispositif de fixation, le support de monture de lunettes étant adapté pour maintenir ladite monture de lunettes dans une position fixe au voisinage de l'écran (111, 113, 114), le support de monture de lunettes étant adapté pour permettre un basculement de la monture de lunettes autour d'un axe Y passant par le plan sagittal de la monture de lunettes, pour pivoter à droite et à gauche, de manière à rapprocher le cercle droit, respectivement gauche de la monture de lunettes, de la surface de l'écran plat,
- le dispositif de fixation et le support de monture de lunettes présentant au moins une ouverture entre un cercle de ladite monture dans ladite position fixe, et la surface de l'écran, lorsque le dispositif de fixation est fixé sur la tablette électronique, ladite ouverture étant adaptée pour permettre à un opérateur de visualiser une image graphique affichée sur l'écran de la tablette par projection à travers ladite ouverture, de manière à déterminer le diamètre d'un verre destiné à être monté sur un cercle de ladite monture de lunettes ou à contrôler le montage d'un verre sur ladite monture de lunettes.

8. Accessoire selon la revendication 7, comprenant des moyens de rotation du support de monture autour d'une ou deux directions de la surface de l'écran.

9. Procédé de détermination du diamètre d'un verre de compensation ophtalmique destiné à être monté sur une monture de lunettes, le procédé comprenant les étapes suivantes :
- disposer une monture de lunettes (5) dans une position prédéterminée sur un support de monture de lunettes d'un appareil selon l'une des revendications 1 à 6 ;
- afficher sur l'écran de la tablette électronique au moins une image projetée obtenue par traitement d'une image graphique d'un contour de verre de diamètre déterminé et de position déterminée de manière à déformer ladite image graphique par demi-image en fonction d'un angle de dièdre de la monture de lunettes (5) et en fonction du sens de pivotement du support de monture ;
- comparer visuellement par projection un cercle de ladite monture et l'image projetée du contour de verre affichée sur l'écran de la tablette électronique ;
- en déduire un diamètre de verre de compensation ophtalmique destiné à être monté sur ladite monture de lunettes.

10. Méthode de contrôle du montage d'au moins un verre de compensation ophtalmique sur une monture de lunettes, ledit verre comportant au moins un marquage physique, la méthode de contrôle comprenant les étapes suivantes :
- enregistrement d'au moins une image numérique comportant au moins un repère graphique représentatif d'une vue de face du verre de compensation ophtalmique et/ou du patient destiné à porter le verre de compensation ophtalmique monté sur ladite monture ;
- traitement numérique de ladite image adapté pour déformer ladite image par demi-image en fonction d'un angle de dièdre de la monture de lunettes (5) et en fonction d'un sens de pivotement du support de monture de manière à générer une image projetée ;
- affichage de ladite image projetée sur un écran de tablette numérique ;
- positionnement de la monture comprenant ledit au moins un verre de compensation ophtalmique, une face du verre étant placée sur la surface de l'écran de la tablette,
- alignement de ladite monture vis-à-vis de l'image projetée affichée sur l'écran de manière à permettre un contrôle visuel de la position du au moins un marquage physique par projection vis à vis de la position du au moins un repère graphique correspondant dans l'image projetée affichée sur l'écran.

11. Méthode de contrôle selon la revendication 10 dans laquelle ladite au moins une image numérique est une image photographique du patient portant la monture de lunettes et dans laquelle le au moins un repère graphique comprend un repère graphique parmi : une position de reflet cornéen, une ligne passant par les centres des deux yeux, une zone de vision de près, un point de vision de loin, un corridor de verre progressif, une ligne horizontale, un centre optique.

12. Méthode de contrôle selon la revendication 10 dans laquelle ladite au moins une image numérique comprend un gabarit de contrôle de la dimension du verre et/ou de la forme du contour du verre, une image de la distribution spatiale de puissance de réfraction du verre de compensation ophtalmique et/ou une image de la distribution spatiale de distorsion du verre de compensation ophtalmique.

13. Méthode de contrôle selon l'une des revendications 10 à 12 comprenant en outre une étape d'affichage d'un outil graphique par superposition sur l'image projetée affichée, l'outil graphique étant adapté pour permettre d'évaluer une distance entre la position du au moins un marquage de fabrication et la position du au moins un repère graphique correspondant dans l'image projetée affichée sur l'écran.

14. Méthode de contrôle selon l'une des revendications 10 à 13 comprenant en outre une étape supplémentaire d'enregistrement d'un résultat dudit contrôle de préférence sous forme d'un enregistrement d'une image de la monture comprenant le verre de compensation ophtalmique et les marquages de fabrication, la monture étant positionnée sur l'écran de la tablette numérique affichant l'image projetée et le au moins un repère graphique correspondant.

15. Méthode de contrôle selon l'une des revendications 10 à 14 dans laquelle la monture comprend deux verres de compensation ophtalmique et dans laquelle on applique la méthode de contrôle simultanément aux deux verres ou successivement à chacun des deux verres.

## Patentansprüche

1. Vorrichtung (100, 200, 300, 400) zur Bestimmung des Durchmessers eines ophthalmischen Kompensationsglases, das dazu bestimmt ist, auf einem Brillengestell (5) montiert zu sein, oder zur Kontrolle der Montage eines ophthalmischen Kompensationsglases auf einem Brillengestell (5), **dadurch gekennzeichnet, dass** die Vorrichtung Folgendes aufweist:
- ein elektronisches Tablet (110) mit einem Bildschirm (111, 113, 114),
- einen Brillengestellträger, wobei der Brillengestellträger eine Öffnung aufweist und geeignet ist, das Brillengestell (5) in einer bestimmten Position zu halten, wobei eine Seite des Brillengestells (5) in der Nähe der Fläche des Bildschirms (111, 113, 114) platziert ist, wobei der Brillengestellträger geeignet ist, ein Kippen des Brillengestells um eine Y-Achse zu gestatten, die durch die Sagittalebene des Brillengestells verläuft, um nach rechts und nach links zu schwenken, um den rechten beziehungsweise linken Rand des Brillengestells der Fläche des Flachbildschirms anzunähern,
und
- Mittel zur Speicherung mindestens eines graphischen Bilds, das mindestens ein graphisches Bezugszeichen aufweist, das mit dem ophthalmischen Kompensationsglas und/oder dem Patienten, der das ophthalmische Kompensationsglas, das auf dem Gestell montiert ist, tragen soll, in Verbindung steht;
- Mittel zur Verarbeitung des Bilds, die geeignet sind, das Bild halbbildweise in Abhängigkeit von einem Diederwinkel des Brillengestells (5) und in Abhängigkeit von der Schwenkrichtung des Gestellträgers zu verformen, um ein projiziertes Bild zu erzeugen;
- Mittel zur Anzeige des projizierten Bilds (160, 170, 180, 190) auf dem Bildschirm (111), und
- Mittel zur Ausrichtung des Gestells gegenüber dem projizierten Bild, das auf dem Bildschirm (111, 113, 114) angezeigt wird,
- wobei die elektronischen Anzeigemittel dazu ausgebildet sind, einem Bediener zu gestatten, einen Durchmesser eines Glases, das dazu bestimmt ist, auf dem Brillengestell montiert zu sein, durch Projektion mindestens eines Rands des Gestells über die Öffnung gegenüber der Position des mindestens einen entsprechenden graphischen Bezugszeichens im projizierten Bild visuell zu bestimmen, das auf dem Bildschirm angezeigt wird, oder die Montage eines ophthalmischen Kompensationsglases auf dem Brillengestell durch Projektion eines physischen Bezugszeichens visuell zu kontrollieren, das mit dem Glas in Verbindung steht, das auf dem Gestell montiert ist, gegenüber der Position des mindestens einen entsprechenden graphischen Bezugszeichens im projizierten Bild, das auf dem Bildschirm angezeigt wird.

2. Vorrichtung zur Bestimmung des Durchmessers eines Glases oder zur Kontrolle der Montage eines Glases auf einem Brillengestell nach Anspruch 1, ferner umfassend eine Befestigungsvorrichtung (140, 150, 230, 440, 450), die mit dem Brillengestellträger mechanisch verbunden ist, wobei die Befestigungsvorrichtung eine Befestigungsklammer (440, 450) umfasst, die dazu bestimmt ist, an einer Kante des elektronischen Tablets (110) oder einem Rahmen (140, 150, 230), der geeignet ist, das elektronische Tablet zu umgeben, befestigt zu sein, wobei der Rahmen eine Öffnung gegenüber dem Bildschirm (111) des elektronischen Tablets (110) aufweist.

3. Vorrichtung zur Bestimmung des Durchmessers eines Glases oder zur Kontrolle der Montage eines Glases auf einem Brillengestell nach einem der Ansprüche 1 bis 2, wobei der Brillengestellträger (260, 360) um eine Achse (270, 370) parallel zum Bildschirm drehbeweglich gelagert ist, so dass ein Parallaxenfehler zwischen dem Abschnitt des Gestells und dem angezeigten Bild verringert wird.

4. Vorrichtung zur Bestimmung des Durchmessers eines Glases oder zur Kontrolle der Montage eines Glases auf einem Brillengestell nach einem der Ansprüche 1 bis 3, wobei der Bildschirm (111) ein Flachbildschirm, ein gekrümmter Bildschirm (113, 114) mit einer konkaven Krümmung nach außen oder ein flexibler Bildschirm ist.

5. Vorrichtung zur Bestimmung des Durchmessers eines Glases oder zur Kontrolle der Montage eines Glases auf einem Brillengestell nach einem der Ansprüche 1 bis 4, wobei der Brillengestellträger (360, 460) eine Mehrzahl von Befestigungsstiften oder -klemmen (321, 322, 323, 324, 421, 422, 423, 424) aufweist, die dazu bestimmt sind, das Brillengestell aufzunehmen und zu halten.

6. Vorrichtung zur Bestimmung des Durchmessers eines Glases oder zur Kontrolle der Montage eines Glases auf einem Brillengestell nach einem der Ansprüche 1 bis 4, wobei der Brillengestellträger eine Anlagefläche (121, 221) und ein bewegliches Teil (125, 225) aufweist, das so ausgebildet ist, dass es gegen einen Mittelsteg (53) des Brillengestells (5) in Anlage kommt, und dass eine Seite des Brillengestells (5) mit der Anlagefläche (121, 221) in Kontakt kommt, wobei das Brillengestell (5) durch Druck zwischen dem beweglichen Teil (125, 225) und der Anlagefläche (121, 221) gehalten wird.

7. Zubehör für elektronisches Tablet zur Bestimmung des Durchmessers eines Glases, das dazu bestimmt ist, auf einem Brillengestell montiert zu sein, oder zur Kontrolle der Montage eines Glases auf einem Brillengestell, wobei das Zubehör Folgendes aufweist:
- eine Befestigungsvorrichtung (130, 140, 230, 330, 340, 430, 440) zur Befestigung an einem elektronischen Tablet mit einem Flachbildschirm (111, 113, 114); und
- einen Brillengestellträger, der mit der Befestigungsvorrichtung mechanisch verbunden ist, wobei der Brillengestellträger geeignet ist, das Brillengestell in einer festen Position in der Nähe des Bildschirms (111, 113, 114) zu halten, wobei der Brillengestellträger geeignet ist, ein Kippen des Brillengestells um eine Y-Achse zu gestatten, die durch die Sagittalebene des Brillengestells verläuft, um nach rechts und nach links zu schwenken, um den rechten beziehungsweise linken Rand des Brillengestells der Fläche des Flachbildschirms anzunähern,
- wobei die Befestigungsvorrichtung und der Brillengestellträger mindestens eine Öffnung zwischen einem Rand des Gestells in der festen Position und der Fläche des Bildschirms aufweisen, wenn die Befestigungsvorrichtung am elektronischen Tablet befestigt ist, wobei die Öffnung geeignet ist, einem Bediener zu gestatten, ein graphisches Bild, das auf dem Bildschirm des Tablets angezeigt wird, durch Projektion durch die Öffnung zu visualisieren, um den Durchmesser eines Glases zu bestimmen, das dazu bestimmt ist, an einem Rand des Brillengestells montiert zu sein, oder die Montage eines Glases auf dem Brillengestell zu kontrollieren.

8. Zubehör nach Anspruch 7, umfassend Mittel zur Drehung des Gestellträgers um eine oder zwei Richtungen der Fläche des Bildschirms.

9. Verfahren zur Bestimmung des Durchmessers eines ophthalmischen Kompensationsglases, das dazu bestimmt ist, auf einem Brillengestell montiert zu sein, wobei das Verfahren die folgenden Schritte umfasst:
- Anordnen eines Brillengestells (5) in einer vorbestimmten Position auf einem Brillengestellträger einer Vorrichtung nach einem der Ansprüche 1 bis 6;
- Anzeigen, auf dem Bildschirm des elektronischen Tablets, mindestens eines projizierten Bilds, das durch Verarbeitung eines graphischen Bilds einer Kontur eines Glases mit einem bestimmten Durchmesser und einer bestimmten Position erhalten wird, um das graphische Bild halbbildweise in Abhängigkeit von einem Diederwinkel des Brillengestells (5) und in Abhängigkeit von der Schwenkrichtung des Gestellträgers zu verformen;
- visuelles Vergleichen, durch Projektion, eines Rands des Gestells und des projizierten Bilds der Glaskontur, das auf dem Bildschirm des elektronischen Tablets angezeigt wird;
- Ableiten eines Durchmessers eines ophthalmischen Kompensationsglases davon, das dazu bestimmt ist, auf dem Brillengestell montiert zu sein.

10. Verfahren zur Kontrolle der Montage mindestens eines ophthalmischen Kompensationsglases auf einem Brillengestell, wobei das Glas mindestens eine physische Markierung aufweist, wobei das Kontrollverfahren die folgenden Schritte umfasst:
- Abspeichern mindestens eines Digitalbilds, das mindestens ein graphisches Bezugszeichen aufweist, das für eine Frontalansicht des ophthalmischen Kompensationsglases und/oder des Patienten, der das ophthalmische Kompensationsglas, das auf dem Gestell montiert ist, tragen soll, repräsentativ ist;
- digitales Verarbeiten des Bilds, das geeignet sind, das Bild halbbildweise in Abhängigkeit von einem Diederwinkel des Brillengestells (5) und in Abhängigkeit von einer Schwenkrichtung des Gestellträgers zu verformen, um ein projiziertes Bild zu erzeugen;
- Anzeigen des projizierten Bilds auf einem Bildschirm eines digitalen Tablets;
- Positionieren des Gestells, das das mindestens eine ophthalmische Kompensationsglas umfasst, wobei eine Seite des Glases auf der Fläche des Bildschirms des Tablets platziert ist,
- Ausrichten des Gestells gegenüber dem projizierten Bild, das auf dem Bildschirm angezeigt wird, um eine visuelle Kontrolle der Position der mindestens einen physischen Markierung durch Projektion gegenüber der Position des mindestens einen entsprechenden graphischen Bezugszeichens in dem projizierten Bild, das auf dem Bildschirm angezeigt wird, zu gestatten.

11. Kontrollverfahren nach Anspruch 10, wobei das mindestens eine Digitalbild ein photographisches Bild des Patienten ist, der das Brillengestell trägt, und wobei das mindestens eine graphische Bezugszeichen ein graphisches Bezugszeichen von folgenden umfasst: eine Hornhautreflexionsposition, eine Linie, die durch die Mittelpunkte der zwei Augen verläuft, ein Nahsichtbereich, ein Fernsichtpunkt, ein Gleitsichtglaskorridor, eine horizontale Linie, ein optischer Mittelpunkt.

12. Kontrollverfahren nach Anspruch 10, wobei das mindestens eine Digitalbild eine Schablone zur Kontrolle der Abmessung des Glases und/oder der Form der Kontur des Glases, ein Bild der räumlichen Verteilung des Brechungsvermögens des ophthalmischen Kompensationsglases und/oder ein Bild der räumlichen Verteilung der Verzeichnung des ophthalmischen Kompensationsglases umfasst.

13. Kontrollverfahren nach einem der Ansprüche 10 bis 12, ferner umfassend einen Schritt des Anzeigens eines graphischen Werkzeugs durch Überlagerung auf dem angezeigten projizierten Bild, wobei das graphische Werkzeug geeignet ist, zu gestatten, einen Abstand zwischen der Position der mindestens einen Herstellungsmarkierung und der Position des mindestens einen entsprechenden graphischen Bezugszeichens im projizierten Bild, das auf dem Bildschirm angezeigt wird, zu bewerten.

14. Kontrollverfahren nach einem der Ansprüche 10 bis 13, ferner umfassend einen zusätzlichen Schritt des Abspeicherns eines Ergebnisses der Kontrolle, vorzugsweise in Form eines Abspeicherns eines Bilds des Gestells, das das ophthalmische Kompensationsglas und die Herstellungsmarkierungen umfasst, wobei das Gestell auf dem Bildschirm des digitalen Tablets positioniert ist, das das projizierte Bild und das mindestens eine entsprechende graphische Bezugszeichen anzeigt.

15. Kontrollverfahren nach einem der Ansprüche 10 bis 14, wobei das Gestell zwei ophthalmische Kompensationsgläser umfasst, und wobei das Kontrollverfahren gleichzeitig auf die zwei Gläser oder nacheinander auf jedes der Gläser angewandt wird.

## Claims

1. An apparatus (100, 200, 300, 400) for determining the diameter of an ophthalmic compensation lens intended to be mounted in a spectacle frame (5) or for checking the mounting of an ophthalmic compensation lens in a spectacle frame (5), **characterized in that** the apparatus comprises:
- an electronic tablet (110) having a screen (111, 113, 114),
- a spectacle frame support, the spectacle frame support exhibiting an opening and being suitable for holding said spectacle frame (5) in a determined position, a face of the spectacle frame (5) being placed in the vicinity of the surface of the screen (111, 113, 114), the spectacle frame support being adapted to allow tilting of the spectacle frame about an axis Y passing through the sagittal plane of the spectacle frame, for pivoting to the right and to the left, so as to bring the right, respectively left rim of the spectacle frame, close to the surface of the flat screen and
- means for storing at least one graphical image comprising at least one graphical reference marker associated with the ophthalmic compensation lens and/or the patient intended to wear the ophthalmic compensation lens mounted in said frame;
- means for processing said image which are suitable for deforming said image by half-image depending on a dihedral angle of the spectacle frame (5) and depending on the pivoting direction of the frame support so as to generate a projected image;
- means for displaying said projected image (160, 170, 180, 190) on the screen (111), and
- means for aligning said frame in relation to the projected image displayed on the screen (111, 113, 114),
- said electronic display means being configured to allow an operator to visually determine a diameter of lens intended to be mounted in said spectacle frame by projecting at least one rim of the frame via said opening in relation to the position of the at least one corresponding graphical reference marker in the projected image displayed on the screen or to visually check the mounting of an ophthalmic compensation lens in said spectacle frame by projecting a physical reference marker associated with the lens mounted in said frame in relation to the position of the at least one corresponding graphical reference marker in the projected image displayed on the screen.

2. The apparatus for determining the diameter of a lens or for checking the mounting of a lens on a spectacle frame as claimed in claim 1, furthermore comprising a fixing device (140, 150, 230, 440, 450) linked mechanically to the spectacle frame support, the fixing device comprising a fixing clamp (440, 450) intended to be fixed on an edge of the electronic tablet (110) or a case (140, 150, 230) suitable for surrounding the electronic tablet, the case comprising an opening facing the screen (111) of the electronic tablet (110).

3. The apparatus for determining the diameter of a lens or for checking the mounting of a lens on a spectacle frame as claimed in one of claim 1 to 2, in which the spectacle frame support (260, 360) is mounted movable in rotation about an axis (270, 370) parallel to the screen, so as to reduce a parallax error between the portion of the frame and the displayed image.

4. The apparatus for determining the diameter of a lens or for checking the mounting of a lens on a spectacle frame as claimed in one of claim 1 to 3, in which the screen (111) is a flat screen, a curved screen (113, 114) having an outwardly concave curvature or a flexible screen.

5. The apparatus for determining the diameter of a lens or for checking the mounting of a lens on a spectacle frame as claimed in one of claim 1 to 4, in which the spectacle frame support (360, 460) comprises a plurality of fixing clamps or lugs (321, 322, 323, 324, 421, 422, 423, 424) intended to receive and to hold the spectacle frame.

6. The apparatus for determining the diameter of a lens or for checking the mounting of a lens on a spectacle frame as claimed in one of claims 1 to 4, in which the spectacle frame support comprises a bearing surface (121, 221) and a movable component (125, 225) suitable for bearing against a median bridge (53) of said spectacle frame (5) and so that a face of said spectacle frame (5) comes into contact with said bearing surface (121, 221), the spectacle frame (5) being held by pressure between the movable component (125, 225) and the bearing surface (121, 221).

7. An electronic tablet accessory for determining the diameter of a lens intended to be mounted in a spectacle frame or for checking the mounting of a lens in a spectacle frame, said accessory comprising:
- a fixing device (130, 140, 230, 330, 340, 430, 440) intended to be fixed on an electronic tablet having a flat screen (111, 113, 114); and
- a spectacle frame support linked mechanically to the fixing device, the spectacle frame support being suitable for holding said spectacle frame in a fixed position in the vicinity of the screen (111, 113, 114), the spectacle frame support being adapted to allow tilting of the spectacle frame about an axis Y passing through the sagittal plane of the spectacle frame, for pivoting to the right and to the left, so as to bring the right, respectively left rim of the spectacle frame, close to the surface of the flat screen,
- the fixing device and the spectacle frame support having at least one opening between a rim of said frame in said fixed position, and the surface of the screen, when the fixing device is fixed on the electronic tablet, said opening being suitable for allowing an operator to view a graphical image displayed on the screen of the tablet by projection through said opening, so as to determine the diameter of a lens intended to be mounted in a rim of said spectacle frame or to check the mounting of a lens in said spectacle frame.

8. The accessory as claimed in claim 7, comprising means for rotating the frame support around one or two directions of the surface of the screen.

9. A method for determining the diameter of an ophthalmic compensation lens intended to be mounted in a spectacle frame, the method comprising the following steps:
- arranging a spectacle frame (5) in a predetermined position on a spectacle frame support of an apparatus as claimed in one of claims 1 to 6;
- displaying on the screen of the electronic tablet at least one projected image obtained by image processing of a graphical image of a lens outline of determined diameter and determined position so as to deform the graphical image by half-image depending on a dihedral angle of the spectacle frame (5) and depending on the pivoting direction of the frame support;
- visually comparing by projection a rim of said frame and the projected image of the lens outline displayed on the screen of the electronic tablet;
- deducing therefrom a diameter of ophthalmic compensation lens intended to be mounted on said spectacle frame.

10. A procedure for checking the mounting of at least one ophthalmic compensation lens in a spectacle frame, said lens comprising at least one physical marking, the checking procedure comprising the following steps:
- recording at least one digital image comprising at least one graphical reference marker representative of a face-on view of the ophthalmic compensation lens and/or of the patient intended to wear the ophthalmic compensation lens mounted in said frame;
- digital processing of said image suitable for deforming said image by half-image depending on a dihedral angle of the spectacle frame (5) and depending on the pivoting direction of the frame support so as to generate a projected image;
- displaying said projected image on a digital tablet screen;
- positioning the frame comprising said at least one ophthalmic compensation lens, a face of the lens being placed on the surface of the screen of the tablet,
- aligning said frame in relation to the projected image displayed on the screen so as to allow a visual check of the position of the at least one physical marking by projection in relation to the position of the at least one corresponding graphical reference marker in the projected image displayed on the screen.

11. The checking procedure as claimed in claim 10, in which said at least one digital image is a photographic image of the patient wearing the spectacle frame and in which the at least one graphical reference marker comprises a graphical reference marker from among: a position of corneal reflection, a line passing through the centers of the two eyes, a near vision zone, a far vision point, a progressive lens corridor, a horizontal line, an optical center.

12. The checking procedure as claimed in claim 10, in which said at least one digital image comprises a template for checking the dimension of the lens and/or the shape of the outline of the lens, an image of the spatial distribution of refractive power of the ophthalmic compensation lens and/or an image of the spatial distribution of distortion of the ophthalmic compensation lens.

13. The checking procedure as claimed in one of claims 10 to 12, furthermore comprising a step of displaying a graphical tool by superposition on the displayed projected image, the graphical tool being suitable for allowing a distance between the position of the at least one manufacturing marking and the position of the at least one corresponding graphical reference marker in the projected image displayed on the screen to be evaluated.

14. The checking procedure as claimed in one of claims 10 to 13, furthermore comprising an additional step of recording a result of said check preferably in the form of a recording of an image of the frame comprising the ophthalmic compensation lens and the manufacturing markings, the frame being positioned on the screen of the digital tablet displaying the projected image and the at least one corresponding graphical reference marker.

15. The checking procedure as claimed in one of claims 10 to 14, in which the frame comprises two ophthalmic compensation lenses and in which the checking procedure is applied simultaneously to the two lenses or successively to each of the two lenses.
